# EUROPEAN PATENT APPLICATION

(11) **EP 1 291 774 A1**
(43) Date of publication of application: **12.03.2003**
(21) Application number: 01410112.5
(22) Date of filing: 06.09.2001
(51) Int. Cl.: G06F 11/273

(54) **Assistance request system**

(71) Applicant: Hewlett-Packard Company, A Delaware Corporation, Palo Alto, CA 94304 (US)
(72) Inventor: Drif, Dany, 73000 Chambéry (FR); Puyo, Cécile, 38190 Bernin (FR)
(74) Representative: Lloyd, Richard Graham (GB)

(57) **Abstract**

An assistance request system for a computer connected to a network, the assistance request system comprising a message generation module operable to;
receive a signal from a manually operable request device,
in response to the signal, generate a message comprising an assistance request and identification information, and
transmit the message to an assistance source via said network.

## Description

### Description of Invention

This invention relates to an assistance request system for a computer connected to a network.

### Background of the Invention

When a computer needs maintenance, for example in the event of abnormal behaviour, or failure of hardware or software components, or when backup or other maintenance tasks need to be performed, the user may require assistance, for example from a help line or technical support or other assistance source. However, this process is not always optimal for obtaining assistance, as there is invariably a delay before the assistance source is able to lend assistance.

It is also known to provide an automatic error-detection and signalling system, for example the Alert Standard Forum (ASF) specification prepared and distributed by the Distributed Management Task Force, Inc. (DMTF). In accordance with this specification, when an event corresponding to a particular failure is identified by a sensor disposed within the computer, an alert is automatically sent via a network interface card provided on the computer. However, it will be apparent that the user of the computer may require assistance even when no event is automatically detected.

An aim of the present invention is to provide a new or improved assistance request system for a computer connected to a network.

### Summary of the Invention

According to the present invention, we provide an assistance request system for a computer connected to a network, the assistance request system comprising a message operation module operable to receive a signal from a manually operable request device, in response to the signal, generate a message comprising an assistance request and identification information, and transmit the message to an assistance source via said network.

The message generation module may be operable to retrieve information from an information store and generate the message in accordance with the information.

The stored information may be stored in said information store on completion of a successful boot procedure.

The information may comprise a network address of the assistance source.

The information may comprise a network address of the computer.

The information may comprise configuration information.

The assistance request system may be operable, on receipt of the signal from the manually operable request device, to display an information request, receive user information in response to the information request, and generate the message in accordance with the user information.

The manually operable request device may comprise a keyboard comprising an assistance request key.

The assistance request system may comprise a keyboard driver filter, operable to receive a scan code from the keyboard, identify a scan code corresponding to said assistance request key and generate a signal accordingly.

The keyboard may comprise a keyboard controller, the keyboard controller being operable to identifying a key press corresponding to said assistance request key and generate a signal accordingly.

The assistance request key may be directly connected to said message generation module to send a signal to the message generation module on depression of the assistance request key.

The manually operable request device may comprise a manually operable control located on the computer.

### Brief Description of the Drawings

The invention will now be described by way of example only with reference to the accompanying drawings, wherein:
Figure 1 is a diagrammatic view of a computer comprising an assistance request system embodying the present invention,
Figure 2 is a diagrammatic view of a computer comprising a further assistance request system embodying the present invention,
Figure 3 is a diagrammatic view of a computer comprising a yet further assistance request system embodying the present invention, and
Figure 4 is a diagrammatic of a computer comprising a still further assistance request system embodying the present invention.

### Description of the Preferred Embodiments

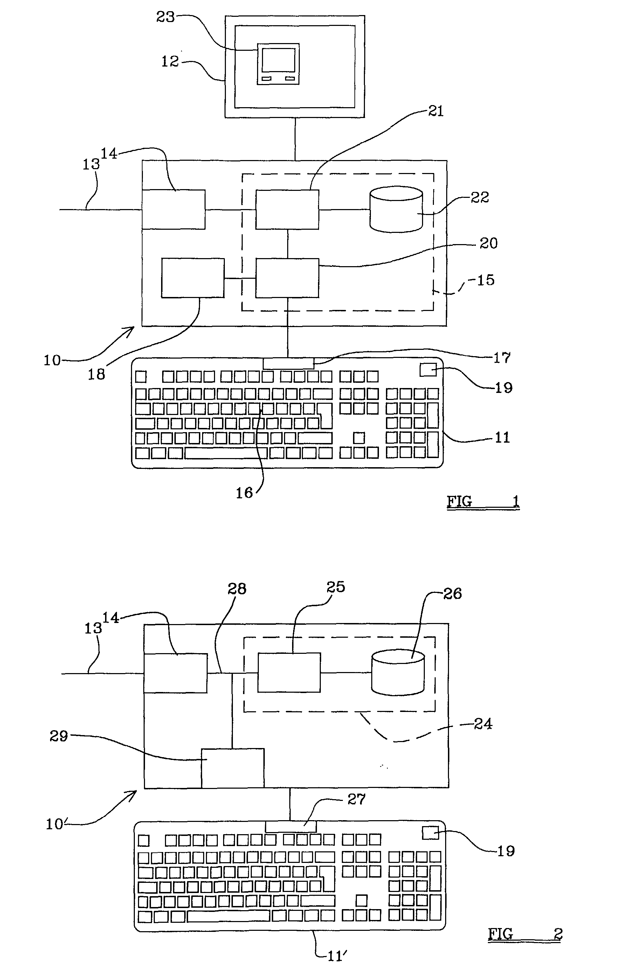

Referring now to Figure 1, a computer system is generally shown at 10 provided with a keyboard 11 and a display means 12. The computer is connected to a network 13 by a network interface card 14, and an assistance request system according to the present invention comprising a request driver module generally indicated at 15. The keyboard 11 comprises a plurality of keys 16 in conventional manner, and a keyboard controller 17 operable to detect a depression of one of the keys 16 and transmit a scan code corresponding to that key to a keyboard driver 18. The keyboard 11 is further provided with an assistant request key 19. The keyboard controller 17 is operable in conventional manner to detect when the key 19 is depressed and transmit a scan code to the keyboard driver 18.

The request driver module 15 comprises a keyboard filter 20. The filter 20 receives each scan code transmitted by the keyboard controller 17 to the keyboard driver 18. Where the scan code received is not that of the assistance request key 19, the filter 20 takes no action, and the scan code is dealt with by the keyboard driver 18 in conventional manner, i.e. the scan code is mapped to a particular character and the character is placed in a buffer where it can be read by an application running on the computer 10. The assistance request system 15 further comprises a message generator module 21 and an information store 22. The information store 22 at least comprises the network address of an assistance source and identification information identifying the computer 10 which may include identification numbers where appropriate or the network address of the computer 10, and may further comprise configuration information relating to the computer, for example BIOS settings, operating system version and service pack versions etc.

The system of Figure 1 operates as follows. When a user presses the key 19, the keyboard 15 detects the key press and generates a scan code which is transmitted to the keyboard driver 18 in conventional manner.

If the scan code is that of the assistance request key 19, the keyboard filter 20 does not pass the scan code to be dealt with by the keyboard driver 18 but generates an assistance request signal which is passed to the message generation module 21. In this example, the message generation module 21 generates an information request, comprising for example a pop-up window 23 which is displayed on the display means 12. The user is able to enter a request or details of a problem using the pop-up box 23. The message generation module 21 then generates an assistance request message comprising the information retrieved from the information store 22, the information supplied by the user on the pop-up box 23 and any other information which may be desirable, for example the time and date of the assistance request, and passes the message to the network interface card 14 for transmission on the network 13 to an assistance source.

Where appropriate, the message generation module 21 prepares the computer for remote maintenance, for example by removing fire walls and allowing remote access, with appropriate security precautions, by the assistance source. The assistance source can assess the request and schedule a response accordingly. For example, if the request is a simple maintenance request, for example for disk backup or a software update or any other request, the user may indicate a time at which the computer 10 will be free and the remote maintenance may take place at that time accordingly. Where a failure or error is reported, the configuration information may be checked to assess, for example whether a software or BIOS update is needed, or indeed whatever other action may be appropriate in the light of the assistance request message.

It will be apparent that for the system of Figure 1 to be operational, the computer 10 must be powered and at least have obtained a sufficiently stable operating system for the keyboard driver 18, the message generation module 21 and network interface card 14 to be operable as discussed above. It will be apparent that if the system is not sufficiently stable to provide a pop-up box 23, the step of requesting information from the user may be omitted for example.

In the system of Figure 1, the message generation module 21 and keyboard filter 20 are preferably implemented in software, for example as part of an operating system of the computer 10. The information store 22 is preferably held on a non-volatile storage medium, such as a hard disk drive of the computer 10.

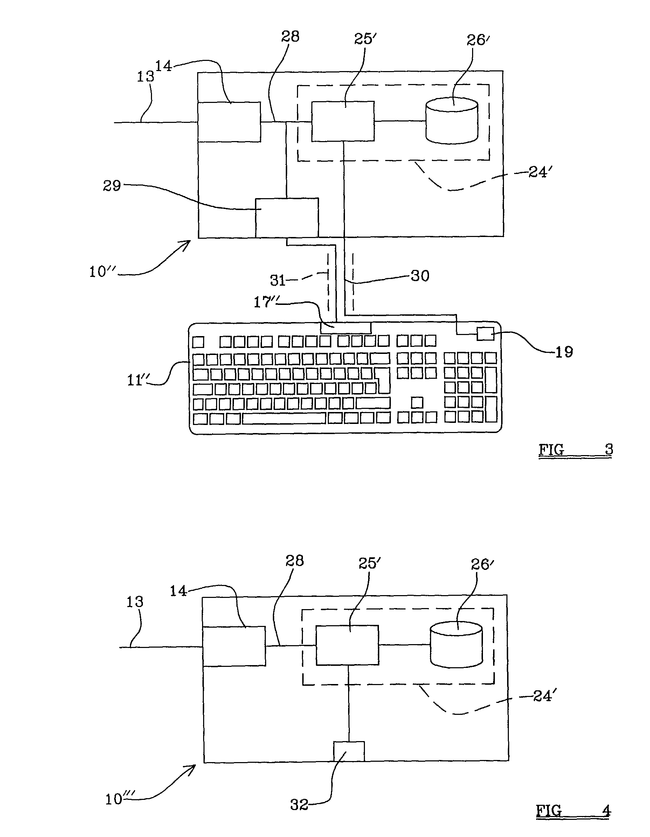

As discussed above, the system of Figure 1 requires that the computer 10 be powered and achieve a sufficiently stable operating system boot. In the further embodiments of the invention shown in Figure 2 to 4 and as described in more detail herein below an assistance request system is provided which is operable in the event that the computer is un-powered or has not achieved a successful boot.

Referring now to Figure 2, a computer system 10' is shown provided with a keyboard 11'. As in Figure 1, the computer 10' comprises a network interface card 14 connecting the computer 10' to a network 13. The computer 10 is provided with a request driver module 24 similar to that shown at 15 in Figure 1 comprising a message generation module 25 and an information store 26. The keyboard 11' is provide with an assistance request key 19, and a keyboard controller 27. The network card 14 and request driver module 24 are connected by a suitable bus 28 whereby power is supplied even if the computer is unpowered, for example an SM bus. The module 24 is likewise connected via the bus 28 to a suitable interface module 29, for example a Super I/O controller of standard type which is connected to the keyboard controller 27 to supply power thereto and receive signals therefrom. In this embodiment, it is desirable that the request driver module 24 comprises a suitable hardware implementation, for example an ASIC or EPROM or any appropriate form as desired. The information store 26 preferably comprises a non-volatile memory, for example being provided as part of an ASIC, which stores information from a successful boot up of the computer 10 as described hereinbefore, but at the very least includes the network address of the assistance source.

In operation, in the embodiment of Figure 2, when the assistance request key 19 is depressed, the keyboard controller 27 detects the key press. Rather than transmitting a scan code, the keyboard controller 27 generates an assistance request signal which is passed by the interface module 29 on the bus 28 to the request driver module 24. The message generation module 25 retrieves the information from the information store 26, generates a message comprising an appropriate assistance request and passes it to the network interface card 14 for transmission on the network 13 to the assistance source.

It will be apparent that where the computer 10' has achieved a successful boot, the message generation module 25 may be operable to generate a information request and display it to the user in like manner to the embodiment of Figure 1. Indeed, when the computer 10' is powered the embodiment of Figure 2 will be functionally the same as the embodiment of Figure 1. It will be apparent that the embodiments of Figures 1 and 2 may be complementary, and so could be both provided on the same computer, the embodiment of Figure 1 being available when the computer is powered and has achieved a stable boot, and the embodiment of Figure 2 being available under all other circumstances. The embodiment of Figure 2 as discussed hereinbefore, has the advantage that it is operable to generate an assistance request even when the computer 10' is unpowered, but the keyboard 11' requires a non-standard keyboard controller 27. The keyboard 11 of Figure 1 is advantageous in that the keyboard controller 17 comprises a standard keyboard controller adapted in simple and conventional manner to accommodate the provision of a further key 19.

It will further be apparent that a assistance request system may be provided in which a signal resulting from an assistance request key being pressed need not be routed through the keyboard controller. Two further alternative embodiments are shown in Figures 3 and 4. As shown in Figure 3, a computer 10" is shown comprising a network interface card 14, network connection 13, bus 28, and I/O controller 29 as in the embodiment of Figure 2. In the embodiment of Figure 3 however, the keyboard 11" comprises a keyboard controller 17" of conventional type which is operable to detect a key press of each of the keys 16 provided on the keyboard 11" other than the assistance request key 19. The assistance request key 19 is provided with a separate connection 30 which connects the assistance request key 19 directly to a request driver module 24' functionally identical to the request driver module 24 of Figure 2. The connection 30 may, for example, comprise a separate, dedicated wire provided in the keyboard connection cable generally indicated at 31. A separate pin would necessarily have to be provided on each plug of the cable 31 and each socket as appropriate. It will be apparent however that, when the computer is unpowered, power will be supplied to the module 24' via the bus 28. The module 24' will be directly responsive to the assistance request key 19 being depressed and operable to generate a message as described hereinbefore.

It will further be apparent, as shown in Figure 4, that where a request driver module 24' is present, the manually operable assistance request means may be located anywhere as desired, and not necessarily on a keyboard. In the embodiment shown in Figure 4, a computer 10"' is provided with a request driver module 24' as described hereinbefore, a network interface card 14 and a network connection 13. The network interface card 14 and request driver module 24' are connected by a suitable bus 28 as described hereinbefore. In this example, the computer 10"' is provided with a manually operable control comprising a request button 32 which is connected to the request driver module 24'. When the button 32 is depressed, the request driver module 24' is operable as described hereinbefore with reference to Figure 2 and 3.

Where the request driver module is present in hardware, it will be apparent that it may be provided as desired anywhere in the computer 10, 10', 10", 10"'. For example, a request driver module may be provided as a card connected to the bus 28, or may be provided on the input/output controller 29, or on the network interface card 14, or on the computer motherboard, or else where as desired. Where the request driver module 24, 24' is provided as part of another component such as a network interface card, it may comprise one or more separate integrated circuits as desired or may be provided as embedded software on that component.

It will be apparent that any embodiment of the present invention may be implemented in hardware or in software or in any combination of hardware and software as desired.

In the present specification "comprises" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An assistance request system for a computer connected to a network, the assistance request system comprising a message generation module operable to;
receive a signal from a manually operable request device,
in response to the signal, generate a message comprising an assistance request and identification information, and
transmit the message to an assistance source via said network.

2. An assistance request system according to claim 1 wherein the message operation module is operable to retrieve information from an information store and generate the message in accordance with the information.

3. An assistance request system according to claim 2 wherein the stored information is stored in said information store on completion of a successful boot procedure.

4. An assistance request system according to claim 2 or claim 3 wherein the information comprises a network address of the assistance source.

5. An assistance request system according to any one of claims 2 to 4 wherein the information comprises a network address of the computer.

6. An assistance request system according to any one of claims 2 to 5 wherein the information comprises configuration information.

7. An assistance request system according to any one of the preceding claims operable, on receipt of the signal from the manually operable request device, to
display an information request,
receive user information in response to the information request, and
generate the message in accordance with the user information.

8. An assistance request system according to any one of the preceding claims wherein the manually operable request device comprises a keyboard comprising an assistance request key.

9. An assistance request system according to claim 8 wherein the system comprises a keyboard driver filter, operable to receive a scan code from the keyboard, identify a scan code corresponding to said assistance request key and generating a signal accordingly.

10. An assistance request system according to claim 8 wherein the keyboard comprises a keyboard controller, the keyboard controller being operable to identify a key press corresponding to said assistance request key and generate a signal accordingly.

11. An assistance request system according to claim 8 wherein the assistance request key is directly connected to said message generation module to send a signal to the message generation module on depression of the assistance request key.

12. An assistance request system according to any one of claims 1 to 7 wherein the manually operable request device comprises a manually operable control located on the computer.
